# EUROPEAN PATENT SPECIFICATION

(11) **EP 2 428 740 B1**
(45) Date of publication and mention of the grant of the patent: **20.11.2024**
(21) Application number: 11179673.6
(22) Date of filing: 01.09.2011
(51) Int. Cl.: F24F 11/00, F24F 3/06, F25B 13/00, F24D 19/10

(54) **Air conditioner and control method thereof**
Klimaanlage und Betriebsverfahren dafür
Climatiseur et son procédé de fonctionnement

(30) Priority: 08.09.2010 KR 20100088105
(43) Date of publication of application: 14.03.2012
(73) Proprietor: Samsung Electronics Co., Ltd., Suwon-si, Gyeonggi-do, 443-742 (KR)
(72) Inventor: Kim, Sung Goo, Gyeonggi-do (KR); Oh, Jae Hyuk, Gyeonggi-do (KR); Jeong, Dong Woon, Gyeonggi-do (KR); Jeon, Yong Hyun, Gyeonggi-do (KR); Park, Chang Seo, Gyeonggi-do (KR); Wu, Seong Je, Seoul (KR)
(74) Representative: Grünecker Patent- und Rechtsanwälte PartG mbB

(56) References cited:
- EP-A1- 2 144 018
- EP-A2- 1 962 035
- US-A- 4 592 206
- US-A1- 2006 218 948

## Description

### BACKGROUND

### 1. Field

Embodiments of the present disclosure relate to an air conditioner equipped with a plurality of indoor units to heat and cool indoor spaces using refrigerant supplied from an outdoor unit and a hot water generator to generate hot water using refrigerant supplied from the outdoor unit, and a control method of the air conditioner.

### 2. Description of the Related Art

In general, an air conditioner includes a refrigeration cycle, and is an apparatus configured to heat or cool an indoor space by implementation of the refrigeration cycle. An example of such a device is disclosed in EP 2 144 018 A1, which comprises a room warming/cooling and hot water supplying heat pump apparatus with a four-way valve, room-side heat exchanger, an expansion device and an outdoor side heat exchanger.

In recent years, various kinds of air conditioners have been developed. For example, there is an air conditioner, such as in the US patent specification 4592206, to allow hot water generated by a hot water generator to be used to heat the indoor space or supply hot water. Such an air conditioner includes an indoor unit to directly exchange heat with indoor air so as to heat and cool the indoor space, and a hot water generator to heat water using high temperature refrigerant supplied to the hot water generator from a compressor of an outdoor unit.

### SUMMARY

The present invention has the object of providing an air conditioner with a reliable indoor heating operation during simultaneous indoor heating & hot water generation.

This object is achieved by an air conditioner according to claim 7 and a control method of an air conditioner according to claim 1.

The present invention provides a control method of an air conditioner, the air conditioner including an outdoor unit, one or more indoor units to heat an indoor space by refrigerant supplied from the outdoor unit, and a hot water generator to heat water by the refrigerant supplied from the outdoor unit. The control method includes controlling supply of the refrigerant by a control unit so that the refrigerant is first supplied to one or more indoor units in operation from the outdoor unit, and is then supplied to the hot water generator.The controlling supply of the refrigerant is executed by controlling an opening degree of a hot water expansion valve provided at the hot water generator, sensing a pressure at a discharge side of a compressor of the outdoor unit, controlling a supply of refrigerant to one or more of the one or more indoor units and the hot water generator based on the sensed pressure of the refrigerant at the discharge side of the compressor of the outdoor unit to prevent the refrigerant from cooling the one or more indoor units or the hot water generator by identifying whether none of the one or more indoor units in operation, identifying whether a pressure at a discharge side of a compressor in the outdoor unit is less than a reference pressure, and if the identified pressure at the discharge side of the compressor is less than the reference pressure and if anyone of the one or more one indoor units is identified as being in operation, then opening the hot water expansion valve to the minimum opening degree.

The control method of the air conditioner may further include identifying whether there is not any one indoor unit in operation among the indoor units, and if there is no indoor unit in operation, opening the hot water expansion valve of the hot water generator to the maximum opening degree thereof.

The control method of the air conditioner may further include identifying whether there is not any one indoor unit in operation among the indoor units, if there is any one indoor unit in operation, identifying a temperature of water which is discharged from the hot water generator, and if the temperature of the discharge water is less than a reference temperature, opening the hot water expansion valve to the minimum opening degree thereof.

The control method of the air conditioner may further include identifying whether there are one or more indoor units in operation among the indoor units, identifying the amount of refrigerant used being used in one or more indoor units in operation among the indoor units, summing all the amount of refrigerant used in one or more indoor units in operation to calculate the total amount of refrigerant used, and opening the hot water expansion valve to the opening degree thereof corresponding to the total amount of refrigerant used.

When the total amount of refrigerant used in one or more indoor units is relatively great, the hot water expansion valve may be opened to the relatively small opening degree thereof, and when the total amount of refrigerant used in one or more indoor units is relatively less, the hot water expansion valve may be opened to the relatively great opening degree thereof.

Each of the maximum total amount of refrigerant used in one or more indoor units and the maximum amount of refrigerant used in the hot water generator may be equal to the amount of refrigerant supplied from the outdoor unit, and the sum of the total amount of refrigerant used in one or more indoor units in operation among the indoor units and the amount of refrigerant used in the hot water generator in operation may be equal to or lesser than the amount of refrigerant supplied from the outdoor unit.

In accordance with another aspect of the present invention provides an air conditioner including an outdoor unit, one or more indoor units to heat an indoor space by refrigerant supplied from the outdoor unit, a hot water generator to heat water by refrigerant supplied from the outdoor unit, a hot water expansion valve arranged at the hot water generator to control the amount of refrigerant which is supplied to the hot water generator, the hot water expansion valve being formed as a flow regulating valve capable of controlling an opening degree thereof, and a control unit configured to allow the hot water expansion valve to be opened to an opening degree thereof corresponding to the total amount of refrigerant used being used in the one or more indoor units, to identify the pressure at a discharge side of the compressor of the outdoor unit, and to control the opening of the hot water expansion valve to a minimum opening degree based on if the identified pressure at the discharge side of the compressor is less than the reference pressure and if anyone of the one or more one indoor units is identified as being in operation.

The control unit may identify whether there is not any one indoor unit in operation, and then open the hot water expansion valve to the maximum opening degree thereof when there is no indoor unit in operation.

The outdoor unit includes a compressor to compress refrigerant and a pressure sensing sensor to sense a pressure at a discharge side of the compressor, and the control unit identifies the pressure at the discharge side of the compressor, and then open the hot water expansion valve to the minimum opening degree thereof when the pressure at the discharge side of the compressor is equal to or lesser than a reference pressure.

The hot water generator may include a heating tank to heat water by refrigerant and a discharge water temperature sensing sensor to sense a temperature of water which is discharged from the heating tank, and the control unit may identify the temperature of the water which is discharged from the heating tank, and then open the hot water expansion valve to the minimum opening degree thereof when the temperature of the discharge water is equal to or lesser than a reference temperature.

### BRIEF DESCRIPTION OF THE DRAWINGS

These and/or other aspects of the disclosure will become apparent and more readily appreciated from the following description of the embodiments, taken in conjunction with the accompanying drawings of which:
FIG. 1 is a view schematically illustrating a refrigeration cycle applied to an air conditioner according to an exemplary embodiment of the present disclosure;
FIG. 2 is a block diagram illustrating control of the air conditioner according to the exemplary embodiment of the present disclosure; and
FIG. 3 is a flowchart illustrating control of the air conditioner according to the exemplary embodiment of the present disclosure.

### DETAILED DESCRIPTION

Reference will now be made in detail to the embodiments of the present disclosure, examples of which are illustrated in the accompanying drawings, wherein like reference numerals refer to like elements throughout.

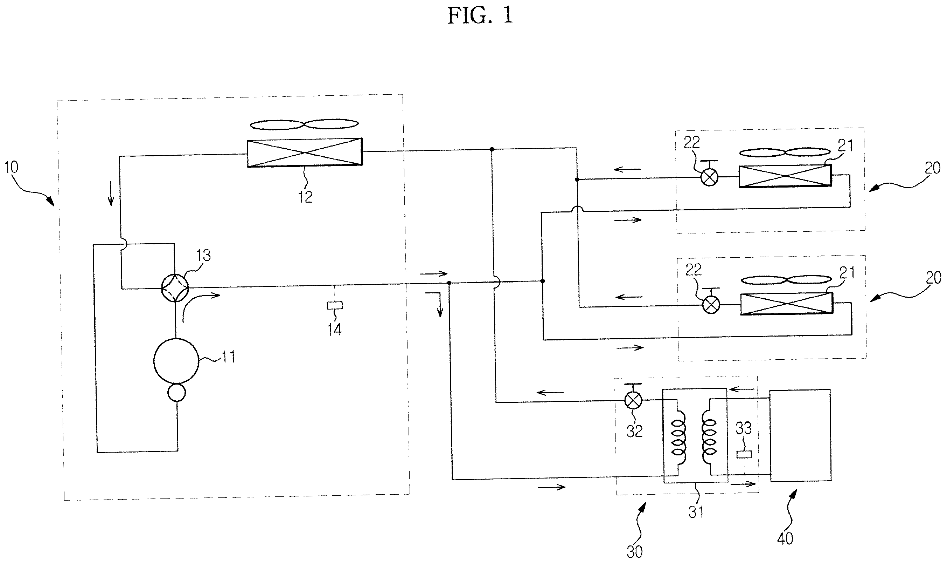

As shown in FIG. 1, an air conditioner according to an exemplary embodiment of the present disclosure includes an outdoor unit 10 arranged at an outdoor space to exchange heat with outdoor air, indoor units 20 to exchange heat with indoor air so as to heat and cool indoor spaces, respectively, a hot water generator 30 to heat water by refrigerant so as to generate hot water, and a hot water consuming device 40 to use the hot water generated by the hot water generator 30. In such an air conditioner, hot or cold air generated through implementation of the refrigeration cycle of the air conditioner may be used to heat and cool the indoor space, and hot water generated by the hot water generator 30 may be supplied to the hot water consuming device 40 such as a floor heater or a hot water supply device.

The outdoor unit 10 includes a compressor 11 to compress refrigerant, an outdoor heat exchanger 12 to allow the refrigerant to exchange heat with outdoor air, a four-way valve 13 to selectively supply the refrigerant compressed by the compressor 11 to any one of the outdoor heat exchanger 12 and each indoor unit 20, and a pressure sensing sensor 14 to sense pressure of the refrigerant discharged from the compressor 11, namely, pressure of the refrigerant which passes through a path provided at a discharge side of the compressor 11.

The indoor unit 20 is comprised of a plurality of indoor units 20 which may independently heat and cool a plurality of indoor spaces, respectively. Such an indoor unit 20 is a device to heat and cool the indoor space while allowing the refrigerant supplied from the outdoor unit 10 to exchange heat with indoor air. Each indoor unit 20 includes an indoor heat exchanger 21 to allow the refrigerant to exchange heat with indoor air, and an air conditioning expansion valve 22 to decompress and expand the refrigerant.

The hot water generator 30 is a device to heat water by the refrigerant supplied from the outdoor unit 10 so as to generate hot water. The hot water generator 30 includes a heating tank 31 to heat water while allowing the refrigerant supplied from the outdoor unit 10 to exchange heat with water supplied from the hot water consuming device 40, a hot water expansion valve 32 to decompress and expand the refrigerant passing through the heating tank 31, and a discharge water temperature sensing sensor 33 to sense temperature of the hot water which is supplied to the hot water consuming device 40 from the heating tank 31 after undergoing heat exchange with the refrigerant in the heating tank 31. Herein, the hot water expansion valve 32 is a flow regulating valve capable of controlling an opening degree thereof to regulate the amount of refrigerant which is supplied to the hot water generator 30.

In this case, indoor heating by the indoor units 20 and hot water generation by the hot water generator 30 may be performed independently of each other. Consequently, either the maximum total amount of refrigerant used in the indoor units when all indoor units 20 are operated or the maximum amount of refrigerant used in the hot water generator 30 when the hot water generator 30 is operated at full load is practically equal to the amount of refrigerant supplied from the outdoor unit 10. Also, when the indoor heating by the indoor units 20 is performed simultaneously with the hot water generation by the hot water generator 30, the sum of the total amount of refrigerant used in indoor units 20 and the amount of refrigerant used in the hot water generator 30 is always maintained at or below the amount of refrigerant supplied from the outdoor unit 10, in order to prevent generation of a cold wind in the indoor units 20.

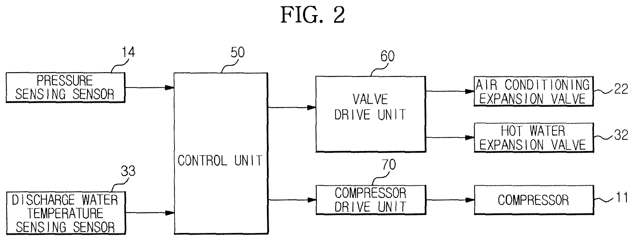

As shown in FIG. 2, the air conditioner also includes a control unit 50 to control overall operation of the air conditioner, a valve drive unit 60 to control the air conditioning expansion valve 22 and the hot water expansion valve 32, and a compressor drive unit 70 to control the compressor 11. In detail, the control unit 50 controls the air conditioning expansion valve 22, the hot water expansion valve 32, and the compressor 11 by the valve drive unit 60 and the compressor drive unit 70, based on pressure and temperature information transferred from the pressure sensing sensor 14 and discharge water temperature sensing sensor 33 described above.

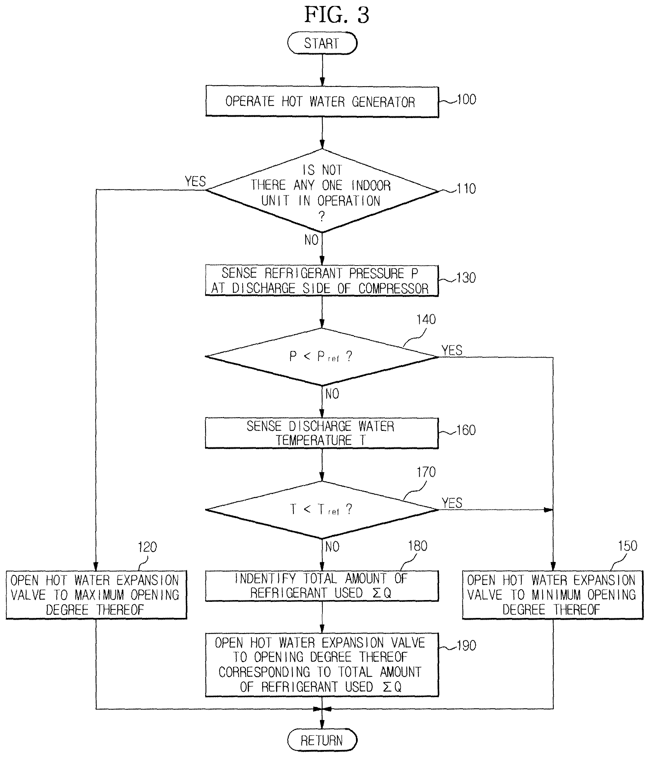

Hereinafter, a control method of the air conditioner configured as described above will be described in detail with reference to FIG. 3.

The control method of the air conditioner according to the present exemplary embodiment sums the amount of refrigerant used being used in one or more indoor units 20 in operation among a plurality of indoor units 20 to derive the total amount of refrigerant used ΣQ, and then opens the hot water expansion valve 32 to the opening degree thereof corresponding to the total amount of refrigerant used ΣQ, thereby regulating the amount of refrigerant which is supplied to the hot water generator 30. That is, the hot water expansion valve 32 is controlled so that refrigerant is first supplied to one or more indoor units 20 in operation from the outdoor unit 10, and is then supplied to the hot water generator 30. This serves to uniformly maintain the amount of refrigerant which is supplied to the indoor units 20, regardless of whether or not the hot water generator 30 is operated. Therefore, in accordance with the above-mentioned configuration, it may be possible to prevent the refrigerant, which may be inadequately supplied to one or more of the indoor units 20 when the hot water generator 30 is operated during heating operation mode, from causing generation of a cold wind in the indoor units 20.

To this end, the control method of the air conditioner, if the hot water generator 30 is operated by a user (operation 100), first identifies whether there is not any one indoor unit 20 in operation among a plurality of indoor units 20 (operation 110). Thereafter, if there is no indoor unit 20 in operation among a plurality of indoor units 20, the hot water expansion valve 32 is opened to the maximum opening degree thereof (operation 120). In other words, if there is no indoor unit 20 in operation among a plurality of indoor units 20, all refrigerant supplied from the outdoor unit 10 is used to operate the hot water generator 30.

On the contrary, the control method of the air conditioner senses refrigerant pressure P at the discharge side of the compressor 11 by the pressure sensing sensor 14 (operation 130) if there is any one indoor unit 20 in operation among a plurality of indoor units 20, and then indentifies whether the sensed refrigerant pressure P is less than the reference pressure Pref (operation 140). If the refrigerant pressure P is less than the reference pressure Pref, the hot water expansion valve 32 is opened to the minimum opening degree thereof (operation 150).

In this case, the reference pressure Pref is the refrigerant pressure P at the discharge side of the compressor 11 during an operation mode of all the indoor units 20. Accordingly, when the hot water generator 30 is operated in a state in which the pressure at the discharge side of the compressor 11 is less than the reference pressure Pref, the refrigerant may be inadequately supplied to one or more of the indoor units 20. As a result, generation of a cold wind may be caused in the indoor units 20 in heating operation. Therefore, in such a case, the hot water generator 30 is opened to the minimum opening degree thereof so that the hot water generator 30 is practically not operated while preventing the refrigerant from remaining in the hot water generator 30.

Further, the control method of the air conditioner senses temperature T of water which is discharged from the heating tank 31 of the hot water generator 30 by the discharge water temperature sensing sensor 33 mounted at the hot water generator 30 (operation 160) if the pressure P at the discharge side of the compressor 11 is equal to or greater than the reference pressure Pref, and then indentifies whether the sensed discharge water temperature T is less than the reference temperature Tref (operation 170).

If the discharge water temperature T is less than the reference temperature Tref, the refrigerant to exchange heat with water while passing through the heating tank 31 may be rapidly cooled by the water, thereby rapidly dropping the refrigerant pressure P at the discharge side of the compressor 11. Accordingly, when the refrigerant pressure P at the discharge side of the compressor 11 is rapidly dropped, the refrigerant may be inadequately supplied to one or more of the indoor units 20. As a result, generation of a cold wind may be caused in the indoor units 20 in heating operation. Therefore, when the discharge water temperature T is less than the reference temperature Tref, the hot water generator 30 is opened to the minimum opening degree thereof so that the hot water generator 30 is practically not operated while preventing the refrigerant from remaining in the hot water generator 30.

Although the above-mentioned method senses the pressure P at the discharge side of the compressor 11 (operation 130), and then senses the discharge water temperature T (operation 160) if the pressure P at the discharge side of the compressor 11 is equal to or greater than the reference pressure Pref, the method may also be executed in reverse order. That is, the method may sense the discharge water temperature T (operation 160), and then identify the pressure P at the discharge side of the compressor 11 (operation 130) if the discharge water temperature T is equal to or greater than the reference temperature Tref.

Thereafter, the control method of the air conditioner, if the discharge water temperature T is equal to or greater than the reference temperature Tref, respectively identifies the amount of refrigerant used being used for heating in indoor units 20 in operation among a plurality of indoor units 20, and then sums the amount of refrigerant used in each indoor unit 20 in operation to indentify the total amount of refrigerant used ΣQ (operation 180). Subsequently, the hot water expansion valve 32 is opened to the opening degree thereof corresponding to the calculated total amount of refrigerant used ΣQ (operation 190). That is, the opening degree of the hot water expansion valve 32 is controlled so that the remaining refrigerant, except for the total amount of refrigerant used ΣQ being used in the indoor units 20 in operation among refrigerant supplied from the outdoor unit 10, is supplied to the hot water generator 30.

In the present exemplary embodiment, a range of the total amount of refrigerant used ΣQ in one or more indoor units 20 in operation among a plurality of indoor units 20 is set in a multistage manner to control the opening degree of the hot water expansion valve 32 according to the set range of the total amount of refrigerant used. In other words, when the total amount of refrigerant used ΣQ is relatively great, the hot water expansion valve 32 is opened to the relatively small opening degree thereof to decrease the amount of refrigerant which is supplied to the hot water generator 30. On the other hand, when the total amount of refrigerant used ΣQ is relatively less, the hot water expansion valve 32 is opened to the relatively great opening degree thereof to increase the amount of refrigerant which is supplied to the hot water generator 30.

As described above, when the opening degree of the hot water expansion valve 32 is controlled according to the total amount of refrigerant used in one or more indoor units 20 in operation, the amount of refrigerant to be supplied to the indoor units 20 may be sufficient even when the hot water generator 30 is operated during heating operation by the indoor units 20. As a result, it may be possible to prevent a cold wind from being generated in the indoor units 20.

The present exemplary embodiment discloses an air conditioner including a plurality of indoor units 20, but is not limited thereto. Thus, an air conditioner including a single indoor unit 20 may also be applied.

As is apparent from the above description, the air conditioner according to an aspect of the present disclosure may control the opening degree of the hot water expansion valve so that the remaining refrigerant, except for the total amount of refrigerant used being used in the indoor units among refrigerant supplied from the outdoor unit, is supplied to the hot water generator, thereby sufficiently supplying refrigerant to the indoor units in operation even when the hot water generator is operated.

Although a few embodiments of the present disclosure have been shown and described, it would be appreciated by those skilled in the art that changes may be made in these embodiments without departing from the scope of the attached claims.

## Claims

1. A control method of an air conditioner, wherein the air conditioner comprises an outdoor unit (10), one or more indoor units (20) to heat an indoor space through refrigerant supplied from the outdoor unit (10), and a hot water generator (30) to heat water through the refrigerant supplied from the outdoor unit (10),
controlling supply of the refrigerant by a control unit (50) so that the refrigerant is first supplied to one or more indoor units (20) in operation from the outdoor unit (10), and is then supplied to the hot water generator,
**characterized by**
wherein the controlling supply of the refrigerant is executed by controlling an opening degree of a hot water expansion valve (32) provided at the hot water generator (30);
sensing a pressure at a discharge side of a compressor of the outdoor unit;
controlling a supply of refrigerant to one or more of the one or more indoor units and the hot water generator based on the sensed pressure of the refrigerant at the discharge side of the compressor of the outdoor unit to prevent the refrigerant from cooling the one or more indoor units or the hot water generator by;
identifying whether none of the one or more indoor units is in operation;
identifying whether the pressure at the discharge side of a compressor of the outdoor unit is less than a reference pressure; and
if the identified pressure at the discharge side of the compressor is less than the reference pressure and if anyone of the one or more one indoor units is identified as being in operation, then opening the hot water expansion valve to a minimum opening degree.

2. The control method of the air conditioner according to claim 1, further comprising:
identifying whether there is not any one indoor unit (20) in operation among the indoor units (20); and
if there is no indoor unit (20) in operation, opening the hot water expansion valve (32) of the hot water generator (30) to the maximum opening degree thereof.

3. The control method of the air conditioner according to claim 1, further comprising:
identifying whether there is not any one indoor unit (20) in operation among the indoor units (20);
if there is any one indoor unit (20) in operation, identifying a temperature of water which is discharged from the hot water generator (30); and
if the temperature of the discharge water is less than a reference temperature, opening the hot water expansion valve (32) to the minimum opening degree thereof.

4. The control method of the air conditioner according to claim 1, further comprising:
identifying whether there are one or more indoor units (20) in operation among the indoor units (20);
identifying the amount of refrigerant used being used in one or more indoor units (20) in operation among the indoor units (20);
summing all the amount of refrigerant used in one or more indoor units (20) in operation to calculate the total amount of refrigerant used; and
opening the hot water expansion valve (32) to the opening degree thereof corresponding to the total amount of refrigerant used.

5. The control method of the air conditioner according to claim 4, wherein:
when the total amount of refrigerant used in one or more indoor units (20) is relatively great, the hot water expansion valve (32) is opened to the relatively small opening degree thereof; and
when the total amount of refrigerant used in one or more indoor units (20) is relatively less, the hot water expansion valve (32) is opened to the relatively great opening degree thereof.

6. The control method of the air conditioner according to claim 1, wherein:
each of the maximum total amount of refrigerant used in one or more indoor units (20) and the maximum amount of refrigerant used in the hot water generator is equal to the amount of refrigerant supplied from the outdoor unit (10); and
the sum of the total amount of refrigerant used in one or more indoor units (20) in operation among the indoor units (20) and the amount of refrigerant used in the hot water generator in operation is equal to or lesser than the amount of refrigerant supplied from the outdoor unit (10).

7. An air conditioner comprising:
an outdoor unit (10)
one or more indoor units (20) to heat an indoor space through refrigerant supplied from the outdoor unit (10)
a hot water generator (30) to heat water through refrigerant supplied from the outdoor unit (10),
**characterized by**
a hot water expansion valve (32) arranged at the hot water generator (30) to control the amount of refrigerant which is supplied to the hot water generator (30), the hot water expansion valve (32) being formed as a flow regulating valve capable of controlling an opening degree thereof; and
a control unit (50) configured to allow the hot water expansion valve (32) to be opened to an opening degree thereof corresponding to the total amount of refrigerant used being used in the one or more indoor units (20), to identify the pressure at a discharge side of the compressor of the outdoor unit, and to control the opening of the hot water expansion valve to a minimum opening degree based on if the identified pressure at the discharge side of the compressor is less than the reference pressure and if anyone of the one or more one indoor units is identified as being in operation.

8. The air conditioner according to claim 7, wherein the control unit (50) identifies whether there is not any one indoor unit (20) in operation, and then opens the hot water expansion valve (32) to the maximum opening degree thereof when there is no indoor unit (20) in operation.

9. The air conditioner according to claim 7, wherein:
the outdoor unit (10) comprises a compressor (11) to compress refrigerant, and a pressure sensing sensor to sense a pressure at a discharge side of the compressor (11); and
the control unit (50) identifies the pressure at the discharge side of the compressor (11), and then opens the hot water expansion valve (32) to the minimum opening degree thereof when the pressure at the discharge side of the compressor (11) is equal to or lesser than a reference pressure.

10. The air conditioner according to claim 7, wherein:
the hot water generator (30) comprises a heating tank (31) to heat water through refrigerant, and a discharge water temperature sensing sensor to sense a temperature of water which is discharged from the heating tank (31); and
the control unit (50) identifies the temperature of the water which is discharged from the heating tank (31), and then opens the hot water expansion valve (32) to the minimum opening degree thereof when the temperature of the discharge water is equal to or lesser than a reference temperature.

## Patentansprüche

1. Steuerverfahren einer Klimaanlage, wobei die Klimaanlage eine Außeneinheit (10), eine oder mehrere Inneneinheiten (20) zum Heizen eines Innenraums durch ein von der Außeneinheit (10) zugeführtes Kältemittel und einen Warmwassererzeuger (30) zum Heizen von Wasser durch das von der Außeneinheit (10) zugeführte Kältemittel umfasst,
Steuern der Zufuhr des Kältemittels durch eine Steuereinheit (50), so dass das Kältemittel zunächst einem oder mehreren in Betrieb befindlichen Inneneinheiten (20) von der Außeneinheit (10) zugeführt wird und anschließend dem Warmwassererzeuger zugeführt wird,
**gekennzeichnet durch**
wobei das Steuern der Zufuhr des Kältemittels durch Steuern eines Öffnungsgrades eines am Warmwassererzeuger (30) angeordneten Warmwasser-Expansionsventils (32) erfolgt;
Messen eines Drucks auf einer Druckseite eines Kompressors der Außeneinheit;
Steuern einer Zufuhr von Kältemittel zu einem oder mehreren der einen oder mehreren Inneneinheiten und zum Warmwassererzeuger basierend auf dem gemessenen Druck des Kältemittels an der Druckseite des Kompressors der Außeneinheit, um zu verhindern, dass das Kältemittel die eine oder mehreren Inneneinheiten oder den Warmwassererzeuger kühlt;
Identifizieren, ob keine der einen oder mehreren Inneneinheiten in Betrieb ist;
Identifizieren, ob der Druck an der Druckseite eines Kompressors der Außeneinheit kleiner ist als ein Referenzdruck; und
wenn der identifizierte Druck auf der Druckseite des Kompressors kleiner ist als der Referenzdruck und wenn eine oder mehrere der Inneneinheiten als in Betrieb befindlich identifiziert wird, Öffnen des Warmwasser-Expansionsventils auf einen Mindestöffnungsgrad.

2. Steuerverfahren der Klimaanlage nach Anspruch 1, ferner umfassend:
Identifizieren, ob keine Inneneinheit (20) von den Inneneinheiten (20) in Betrieb ist; und
wenn keine Inneneinheit (20) in Betrieb ist, Öffnen des Warmwasser-Expansionsventils (32) des Warmwasserbereiters (30) auf dessen Maximalöffnungsgrad.

3. Steuerverfahren der Klimaanlage nach Anspruch 1, ferner umfassend:
Identifizieren, ob keine Inneneinheit (20) von den Inneneinheiten (20) in Betrieb ist;
wenn eine Inneneinheit (20) in Betrieb ist, Identifizieren einer Temperatur von Wassers, das aus dem Warmwassererzeuger (30) austritt; und
wenn die Temperatur des austretenden Wassers kleiner ist als eine Referenztemperatur, Öffnen des Warmwasser-Expansionsventils (32) auf dessen Mindestöffnungsgrad.

4. Steuerverfahren der Klimaanlage nach Anspruch 1, ferner umfassend:
Identifizieren, ob eine oder mehrere Inneneinheiten (20) von den Inneneinheiten (20) in Betrieb sind;
Identifizieren der Kältemittelmenge, die in einer oder mehreren Inneneinheiten (20) von den Inneneinheiten (20) im Betrieb verbraucht wird;
Summieren der gesamten Kältemittelmenge, die in einer oder mehreren Inneneinheiten (20) im Betrieb verbraucht wird, um die Gesamtmenge des verbrauchten Kältemittels zu berechnen; und
Öffnen des Warmwasser-Expansionsventils (32) auf den Öffnungsgrad, welcher der Gesamtmenge des verbrauchten Kältemittels entspricht.

5. Steuerverfahren der Klimaanlage nach Anspruch 4, wobei:
wenn die Gesamtmenge des in einer oder mehreren Inneneinheiten (20) verbrauchten Kältemittels relativ groß ist, das Warmwasser-Expansionsventil (32) auf dessen relativ kleinen Öffnungsgrad geöffnet wird; und
wenn die Gesamtmenge des in einer oder mehreren Inneneinheiten (20) verbrauchten Kältemittels relativ klein ist, das Warmwasser-Expansionsventil (32) auf einen relativ großen Öffnungsgrad geöffnet wird.

6. Steuerverfahren der Klimaanlage nach Anspruch 1, wobei:
sowohl die maximale Gesamtmenge des in einer oder mehreren Inneneinheiten (20) verbrauchten Kältemittels als auch die maximale Menge des im Warmwassererzeuger verbrauchten Kältemittels gleich der Menge des Kältemittels ist, das von der Außeneinheit (10) zugeführt wird; und
die Summe der Gesamtmenge des in einer oder mehreren Inneneinheiten (20) von den Inneneinheiten (20) im Betrieb verbrauchten Kältemittels und der Menge des im Warmwassererzeuger im Betrieb verbrauchten Kältemittels kleiner gleich der Menge des Kältemittels ist, das von der Außeneinheit (10) zugeführt wird.

7. Klimaanlage, umfassend:
eine Außeneinheit (10),
eine oder mehrere Inneneinheiten (20) zum Heizen eines Innenraums durch von der Außeneinheit (10) zugeführtes Kältemittel,
einen Warmwassererzeuger (30) zum Erhitzen von Wasser durch von der Außengerät (10) zugeführtes Kältemittel,
**gekennzeichnet durch**
ein Warmwasser-Expansionsventil (32), angeordnet am Warmwassererzeuger (30) zum Steuern der Menge des Kältemittels, das dem Warmwassererzeuger (30) zugeführt wird, wobei das Warmwasser-Expansionsventil (32) als Durchflussregelventil gebildet ist, das in der Lage ist, einen Öffnungsgrad von diesem zu steuern; und
eine Steuereinheit (50), ausgebildet zum Ermöglichen, dass das Warmwasser-Expansionsventil (32) bis zu einem Öffnungsgrad geöffnet wird, welcher der Gesamtmenge des in der einen oder den mehreren Inneneinheiten (20) verbrauchten Kältemittels entspricht, zum Identifizieren des Drucks an einer Druckseite des Kompressors der Außeneinheit und zum Steuern des Öffnens des Warmwasser-Expansionsventils auf einen Mindestöffnungsgrad basierend darauf, ob der identifizierte Druck an der Druckseite des Kompressors kleiner ist als der Referenzdruck und ob eine der einen oder mehreren Inneneinheiten als in Betrieb befindlich identifiziert wird.

8. Klimaanlage nach Anspruch 7, wobei die Steuereinheit (50) identifiziert, ob keine Inneneinheit (20) in Betrieb ist, und anschließend das Warmwasser-Expansionsventil (32) auf den Maximalöffnungsgrad öffnet, wenn keine Inneneinheit (20) in Betrieb ist.

9. Klimaanlage nach Anspruch 7, wobei:
die Außeneinheit (10) einen Kompressor (11) zum Komprimieren von Kältemittel und einen Drucksensor zum Erfassen eines Drucks an einer Druckseite des Kompressors (11) umfasst; und
die Steuereinheit (50) den Druck an der Druckseite des Kompressors (11) identifiziert und anschließend das Warmwasser-Expansionsventil (32) auf dessen Mindestöffnungsgrad öffnet, wenn der Druck an der Druckseite des Kompressors (11) kleiner gleich dem Referenzdruck ist.

10. Klimaanlage nach Anspruch 7, wobei:
der Warmwassererzeuger (30) einen Heiztank (31) zum Heizen von Wasser durch Kältemittel und einen Auslasswasser-Temperatursensor zum Erfassen einer Temperatur von Wasser, das aus dem Heiztank (31) ausgelassen wird, umfasst; und
die Steuereinheit (50) die Temperatur des Wassers, dass aus dem Heiztank (31) ausgelassen wird, identifiziert und anschließend das Warmwasser-Expansionsventil (32) auf dessen Mindestöffnungsgrad öffnet, wenn die Temperatur des ausgelassenen Wassers kleiner gleich einer Referenztemperatur ist.

## Revendications

1. Procédé de commande d'un climatiseur, dans lequel le climatiseur comprend une unité extérieure (10), une ou plusieurs unités intérieures (20) pour chauffer un espace intérieur par l'intermédiaire d'un réfrigérant fourni par l'unité extérieure (10), et un générateur d'eau chaude (30) pour chauffer de l'eau par l'intermédiaire d'un réfrigérant fourni par l'unité extérieure (10),
commandant l'alimentation du réfrigérant par une unité de commande (50) de sorte que le réfrigérant soit d'abord fourni à une ou plusieurs unités intérieures (20) en fonctionnement à partir de l'unité extérieure (10), et qu'il soit ensuite fourni au générateur d'eau chaude,
**caractérisé par**
dans lequel la commande de l'alimentation du réfrigérant est exécutée en commandant un degré d'ouverture d'un détendeur d'eau chaude (32) fourni sur le générateur d'eau chaude (30) ;
la détection d'une pression du côté du refoulement d'un compresseur de l'unité extérieure ;
la commande de l'alimentation du réfrigérant à une ou plusieurs unités intérieures et du générateur d'eau chaude sur la base de la pression détectée du réfrigérant du côté du refoulement du compresseur de l'unité extérieure pour empêcher le réfrigérant de refroidir les une ou plusieurs unités intérieures ou le générateur d'eau chaude en ;
déterminant si aucune des une ou plusieurs unités intérieures n'est en fonctionnement ;
déterminant si la pression du côté du refoulement d'un compresseur de l'unité extérieure est inférieure à une pression de référence ; et
si la pression identifiée du côté du refoulement du compresseur est inférieure à la pression de référence et si l'une des une ou plusieurs unités intérieures est identifiée comme étant en fonctionnement, alors l'ouverture du détendeur d'eau chaude à un degré d'ouverture minimum.

2. Procédé de commande du climatiseur selon la revendication 1, comprenant en outre :
l'identification du fait qu'il n'y ait aucune unité intérieure (20) en fonctionnement parmi les unités intérieures (20) ; et
s'il n'y a aucune unité intérieure (20) en fonctionnement, l'ouverture du détendeur d'eau chaude (32) du générateur d'eau chaude (30) à son degré d'ouverture maximal.

3. Procédé de commande du climatiseur selon la revendication 1, comprenant en outre :
l'identification du fait qu'il n'y ait aucune unité intérieure (20) en fonctionnement parmi les unités intérieures (20) ;
s'il y a une unité intérieure (20) en fonctionnement, l'identification d'une température de l'eau qui est refoulée du générateur d'eau chaude (30) ; et
si la température de l'eau refoulée est inférieure à une température de référence, l'ouverture u détendeur d'eau chaude (32) au degré d'ouverture minimum.

4. Procédé de commande du climatiseur selon la revendication 1, comprenant en outre :
l'identification du fait qu'il y ait une ou plusieurs unités intérieures (20) en fonctionnement parmi les unités intérieures (20) ;
l'identification de la quantité de réfrigérant utilisée dans une ou plusieurs unités intérieures (20) en fonctionnement parmi les unités intérieures (20) ;
l'addition de toutes les quantités de réfrigérant utilisées dans une ou plusieurs unités intérieures (20) en fonctionnement pour calculer la quantité totale de réfrigérant utilisée ; et
l'ouverture du détendeur d'eau chaude (32) au degré d'ouverture correspondant à la quantité totale de réfrigérant utilisée.

5. Procédé de commande du climatiseur selon la revendication 4, dans lequel :
lorsque la quantité totale de réfrigérant utilisée dans une ou plusieurs unités intérieures (20) est relativement importante, le détendeur d'eau chaude (32) est ouvert à un degré d'ouverture relativement faible ; et
lorsque la quantité totale de réfrigérant utilisée dans une ou plusieurs unités intérieures (20) est relativement faible, le détendeur d'eau chaude (32) est ouvert à un degré d'ouverture relativement important.

6. Procédé de commande du climatiseur selon la revendication 1, dans lequel :
chacune de la quantité totale maximale de réfrigérant utilisée dans une ou plusieurs unités intérieures (20) et la quantité maximale de réfrigérant utilisée dans le générateur d'eau chaude sont égales à la quantité de réfrigérant fournie par l'unité extérieure (10) ; et
la somme de la quantité totale de réfrigérant utilisée dans une ou plusieurs unités intérieures (20) en fonctionnement parmi les unités intérieures (20) et la quantité de réfrigérant utilisée dans le générateur d'eau chaude en fonctionnement est égale ou inférieure à la quantité de réfrigérant fournie par l'unité extérieure (10).

7. Climatiseur comprenant :
une unité extérieure (10)
une ou plusieurs unités intérieures (20) pour chauffer un espace intérieur en utilisant le réfrigérant fourni par l'unité extérieure (10)
un générateur d'eau chaude (30) pour chauffer de l'eau en utilisant le réfrigérant fourni par l'unité extérieure (10),
**caractérisé par**
un détendeur d'eau chaude (32) agencé sur le générateur d'eau chaude (30) pour commander la quantité de réfrigérant fournie au générateur d'eau chaude (30), le détendeur d'eau chaude (32) étant constitué d'une vanne de régulation de débit capable de commander son degré d'ouverture ; et
une unité de commande (50) configurée pour permettre l'ouverture du détendeur d'eau chaude (32) à un degré d'ouverture correspondant à la quantité totale de réfrigérant utilisée dans les une ou plusieurs unités intérieures (20), pour identifier la pression du côté du refoulement du compresseur de l'unité extérieure et pour commander l'ouverture du détendeur d'eau chaude à un degré d'ouverture minimum si la pression identifiée du côté du refoulement du compresseur est inférieure à la pression de référence et si l'une des une ou plusieurs unités intérieures est identifiée comme étant en cours de fonctionnement.

8. Climatiseur selon la revendication 7, dans lequel l'unité de commande (50) identifie s'il n'y a aucune unité intérieure (20) en fonctionnement, et ouvre alors le détendeur d'eau chaude (32) au degré d'ouverture maximum lorsqu'il n'y a aucune unité intérieure (20) en fonctionnement.

9. Climatiseur selon la revendication 7, dans lequel :
l'unité extérieure (10) comprend un compresseur (11) pour comprimer le réfrigérant, et un capteur de détection de pression pour détecter une pression sur un côté du refoulement du compresseur (11) ; et
l'unité de commande (50) identifie la pression du côté du refoulement du compresseur (11), puis ouvre le détendeur d'eau chaude (32) au degré d'ouverture minimum de celui-ci lorsque la pression du côté du refoulement du compresseur (11) est égale ou inférieure à une pression de référence.

10. Climatiseur selon la revendication 7, dans lequel :
le générateur d'eau chaude (30) comprend un réservoir de chauffage (31) pour chauffer l'eau à travers le réfrigérant, et un capteur de détection de la température de l'eau de refoulement pour détecter une température de l'eau qui est refoulée du réservoir de chauffage (31) ; et
l'unité de commande (50) identifie la température de l'eau qui est refoulée du réservoir de chauffage (31), puis ouvre le détendeur d'eau chaude (32) au degré d'ouverture minimum lorsque la température de l'eau refoulée est égale ou inférieure à une température de référence.
